# FASCICULE DE BREVET EUROPEEN

(11) **EP 2 734 091 B1**
(45) Date de publication et mention de la délivrance du brevet: **09.08.2017**
(21) Numéro de dépôt: 12735161.7
(22) Date de dépôt: 17.07.2012
(51) Int. Cl.: A47J 31/40, A47J 43/07, A47J 31/36

(54) **APPAREIL A LAIT DE SOJA UTILISANT DE LA POUDRE DE SOJA**
SOJAMILCHVORRICHTUNG MIT VERWENDUNG VON PULVER
SOY-MILK APPLIANCE USING SOY POWDER

(30) Priorité: 22.07.2011 FR 1156711
(43) Date de publication de la demande: 28.05.2014
(73) Titulaire: SEB S.A., 69130 Ecully (FR)
(72) Inventeur: PERRIER, Matthieu, F-26000 Valence (FR); BOURGEOIS-JACQUET, Jean-Marie, F-21850 Saint-Apollinaire (FR)
(74) Mandataire: Cémeli, Eric Philippe Laurent
(86) Numéro de dépôt international: PCT/EP2012/064022
(87) Numéro de publication internationale: WO 2013/014036

(56) Documents cités:
- EP-A1- 2 236 437
- GB-A- 1 408 181
- US-A- 3 871 273

## Description

La présente invention concerne le domaine technique des appareils ménagers utilisés pour la préparation de lait de soja.

Dans le domaine ci-dessus, une demande internationale WO 2010/128 255 a proposé un appareil destiné à la préparation de lait de soja par broyage de graines de soja dans de l'eau à l'intérieur d'un récipient de travail. À cet effet l'appareil comprend un bloc moteur à partir duquel s'étend, vers le bas, une tige qui porte une hélice de coupe. Le moteur est destiné à être placé sur le récipient de travail qu'il obture. Le bloc moteur comprend en outre une résistance plongeante qui est destinée à cuire le mélange résultant du broyage des graines de soja dans l'eau.

Un tel appareil ménager donne pleinement satisfaction en ce qui concerne sa fonction première de préparation d'un lait de soja de qualité. Toutefois, cet appareil ménager présente l'inconvénient de nécessiter un nettoyage minutieux des parties du bloc moteur qui sont en contact direct avec le lait de soja préparé ou qui ont reçu des projections pendant le fonctionnement de l'hélice de broyage. De plus la préparation de lait de soja à partir de graines de soja nécessite de broyer ces graines dans de l'eau pour obtenir un mélange relativement homogène en vue de sa cuisson. Ceci induit un temps de préparation relativement important. Par ailleurs, un tel appareil ménager ne permet pas la préparation de petites quantités de lait de soja voire d'une quantité de lait de soja juste suffisante pour une ration individuelle.

Un appareil selon le préambule de la revendication 1 est connu du document GB 1 408 181.

Il est donc apparu le besoin d'un nouveau type d'appareil ménager pour la préparation de lait de soja qui ne présente pas les inconvénients ci-dessus et qui permette, notamment, de s'affranchir de l'opération de broyage et, le cas échéant, autorise la préparation d'une ration individuelle de lait de soja.

Afin d'atteindre ces objectifs, l'invention concerne un appareil ménager pour la préparation de lait de soja comprenant :
- un récipient de travail,
- un compartiment de dosage d'une poudre de soja,
- des moyens de mélange de la poudre de soja avec de l'eau,
- des moyens de transfert de la poudre de soja au moins du compartiment de dosage dans le récipient de travail,
- des moyens de cuisson adaptés pour assurer une cuisson du mélange eau/poudre de soja dans le récipient de travail.
- les moyens de mélange comprenant une partie au moins des moyens de transfert,
- les moyens de transfert comprenant au moins une sortie d'éjection dans le récipient de travail,
du fait que ladite au moins une sortie d'éjection est en position basse dans le récipient de travail ou est dans le fond du récipient de travail, et est adaptée pour induire une agitation du contenu du récipient de travail. La mise en oeuvre d'une telle sortie d'éjection permet d'optimiser le mélange eau/poudre de soja de sorte qu'il est possible de s'affranchir d'un agitateur mécanique.

La présence du compartiment de dosage facilite la détermination par l'utilisateur de la quantité de poudre de soja à utiliser. De plus, la présence des moyens de transfert et les moyens de mélange permet d'obtenir un mélange eau/poudre de soja homogène dont la cuisson par les moyens de cuisson donnera un lait de soja de qualité.

Selon un mode préféré de réalisation de l'invention, le compartiment de dosage est adapté pour recevoir une dose préconditionnée de poudre de soja. L'appareil comprend alors des moyens d'ouverture au moins partielle du conditionnement de la dose préconditionnée.

Selon une forme de réalisation, le compartiment de dosage peut alors comprendre les moyens d'ouverture au moins partielle du conditionnement de la dose préconditionnée. La mise en oeuvre d'une dose préconditionnée facilite plus encore l'intervention de l'utilisateur. De plus les moyens d'ouverture au moins partielle du conditionnement de la dose associés au compartiment de dosage permettent une ouverture automatique de la dose préconditionnée et limitent les risques de pertes de poudre de soja et de souillure, tant de la poudre de soja que de l'environnement de l'appareil ménager selon l'invention. Selon l'invention, les moyens d'ouverture au moins partielle du conditionnement de la dose peuvent être réalisés de toute façon appropriée et, par exemple, sous la forme d'un ou plusieurs poinçons destinés à venir déchirer ou couper l'enveloppe de la dose préconditionnée.

Selon une variante de cette forme de réalisation, les moyens de transfert comprennent les moyens d'ouverture au moins partielle du conditionnement de la dose. L'association des moyens de transfert à des moyens d'ouverture au moins partielle du conditionnement de la dose permet de d'augmenter l'efficacité du transfert de la poudre de soja vers le récipient de travail. Afin d'éviter que de la poudre de soja ne reste dans le conditionnement de la dose, les moyens d'ouverture associés aux moyens de transfert peuvent être combinés aux moyens d'ouverture du compartiment de dosage.

Selon une deuxième forme de réalisation de l'invention, l'appareil ménager pour la préparation de lait de soja comprend un réservoir d'eau, et :
- les moyens de mélange comprennent des moyens de pompage de l'eau du réservoir vers le compartiment de dosage,
- et les moyens de transfert sont adaptés pour transférer le mélange eau/poudre de soja dans le récipient de travail.

La mise en oeuvre du réservoir d'eau et de moyens de pompage permet de simplifier, d'une part, le dosage de l'eau par rapport à la quantité de poudre de soja utilisée et, d'autre part, le mélange de l'eau avec la poudre de soja.

Les moyens de pompage peuvent être réalisés de toute manière appropriée et, par exemple, comprendre une pompe entrainée par un moteur électrique.

Selon une variante de cette forme de réalisation, les moyens de pompage comprennent des moyens de chauffage de l'eau. De tels moyens de chauffage de l'eau permettent d'optimiser la qualité du mélange de l'eau avec la poudre de soja dans la mesure où ce mélange se fait de manière plus homogène dans de l'eau chaude.

Selon une autre variante de cette forme de réalisation, les moyens de pompage comprennent une chaudière de type bouilleur. La mise en oeuvre d'une chaudière de type bouilleur permet, de manière fort avantageuse, d'éviter la mise en oeuvre d'une pompe à moteur électrique de sorte que la fiabilité de l'appareil ménager selon l'invention s'en trouve augmentée tandis que son coût de revient est diminué.

Dans le cadre de l'utilisation conjointe d'une dose préconditionnée de poudre de soja avec un appareil ménager selon l'invention comprenant un réservoir d'eau, le compartiment de dosage de l'appareil selon la deuxième forme de réalisation est adapté pour recevoir une dose préconditionnée de poudre de soja et les moyens de mélange peuvent comprendre au moins une canule d'injection de l'eau en provenance du réservoir dans la dose préconditionnée. Une telle injection de l'eau dans la dose préconditionnée en optimise le mélange de l'eau avec la poudre de soja.

Selon une caractéristique de l'invention, les moyens de mélange comprennent au moins un agitateur mécanique adapté pour induire une agitation du contenu du récipient de travail.

Selon l'invention, l'homogénéisation du mélange eau/poudre de soja par agitation mécanique peut être réalisée de toutes manières appropriées.

Selon une caractéristique de l'invention, les moyens de mélange sont adaptés pour induire un mouvement du récipient de travail. C'est alors le mouvement du récipient de travail qui induit une homogénéisation du mélange. Le mouvement du récipient de travail peut alors être par exemple un mouvement vibratoire de faible amplitude ou au contraire un mouvement de plus grande amplitude tel que par exemple un mouvement de rotation alternatif ou continu du récipient de travail sur lui-même. Afin d'optimiser l'efficacité de l'agitation mécanique, le mouvement du récipient de travail pourra être associé à la mise en oeuvre d'un ou plusieurs éléments d'agitation formés chacun par une ailette fixe solidaire du récipient de travail. Dans cadre d'une agitation assurée notamment par un mouvement du récipient de travail, il peut également être mis en oeuvre un élément d'agitation formé par une ou plusieurs pales fixes par rapport à un châssis de l'appareil ménager et mobiles par rapport au récipient de travail. Selon une caractéristique de l'invention, les moyens de mélange comprennent au moins un élément d'agitation disposé à l'intérieur du récipient de travail et mobile par rapport au récipient de travail. Comme dit ci-dessus l'élément d'agitation peut alors être fixe par rapport au châssis de l'appareil ménager et mobile par rapport au récipient de travail qui est mis en mouvement par rapport au châssis. L'élément d'agitation peut également être mobile par rapport au récipient de travail et au châssis de l'appareil ménager. L'élément d'agitation peut alors être solidaire d'un arbre entraîné en rotation par un moteur électrique. L'élément d'agitation peut aussi comprendre des moyens de couplage magnétique destinés à coopérer avec un système d'entraînement magnétique situé à l'extérieur du récipient de travail de sorte que l'entraînement de l'élément d'agitation s'effectue sans contact.

Selon une caractéristique de l'invention, le récipient de travail est amovible. Ainsi, le récipient de travail peut être déplacé pour servir le lait de soja préparé. Le récipient de travail amovible peut alors présenter une contenance correspondant à une ration individuelle ou au contraire présenter une contenance correspondant à plusieurs rations individuelles.

Selon une autre caractéristique de l'invention, le récipient de travail comprend des moyens de soutirage de son contenu. La mise en oeuvre de tels moyens de soutirage facilite le service du lait de soja préparé au moyen de l'appareil ménager selon l'invention notamment lorsque le récipient de travail présente une contenance correspondant à plusieurs rations individuelles.

Selon l'invention les moyens de cuisson peuvent être réalisés de toute façon appropriée dans la mesure où ils permettent de maintenir le contenu du récipient de travail à une température suffisante, de préférence comprise entre 50 °C et 100 °C, et pendant la durée nécessaire à obtenir une cuisson du mélange eau/poudre de soja.

Ainsi, les moyens de cuisson peuvent comprendre au moins un élément chauffant situé à l'extérieur du récipient de travail. Un tel élément chauffant peut, par exemple, être une résistance électrique chauffante solidaire d'une plaque sur laquelle repose le récipient de travail.

Les moyens de cuisson peuvent également faire intervenir un chauffage par micro-ondes et, dans ce cas, les moyens de cuisson comprennent une source de micro-ondes adaptée pour émettre un rayonnement micro-ondes dans une partie au moins du volume du récipient de travail.

Les moyens de cuisson peuvent également faire intervenir un chauffage par induction. A cet effet, les moyens de cuisson peuvent comprendre une source de champ magnétique d'induction et au moins un élément conducteur associé au récipient de travail et adapté pour chauffer sous l'effet du champ magnétique.

Selon l'invention les moyens de cuisson peuvent également comprendre une résistance chauffante plongeant à l'intérieur du récipient de travail de manière à être en contact avec le contenu de ce dernier. Les moyens de cuisson pourraient également comprendre au moins une résistance électrique intégrée dans la paroi du récipient de travail.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Par ailleurs, diverses autres caractéristiques de l'invention ressortent de la description ci-dessous effectuée en référence aux dessins annexés qui illustrent des formes non limitatives de réalisation d'un appareil ménager pour la préparation de lait de soja conforme à l'invention.

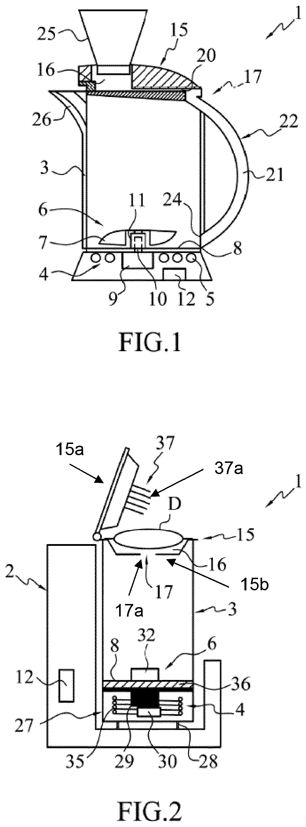

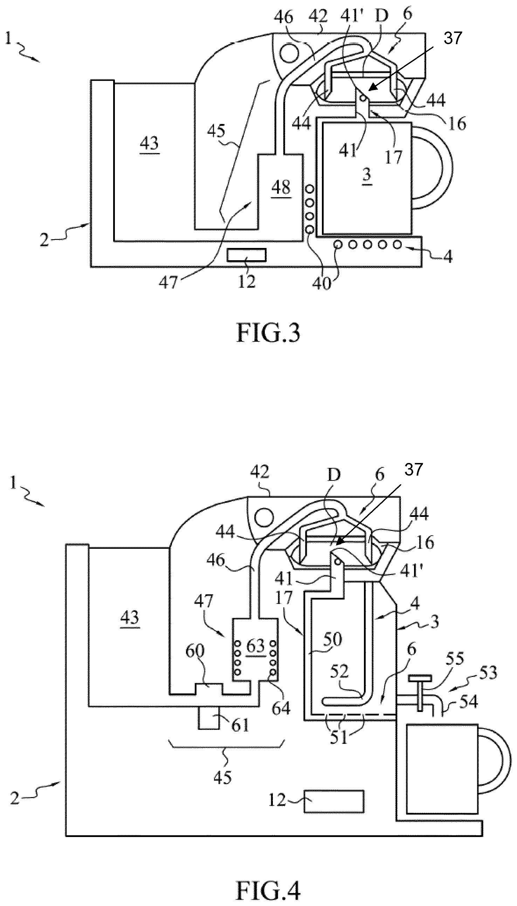

- Les figures 1 et 4 sont des vues en coupe schématique de différentes formes de réalisation d'un appareil ménager pour la préparation de lait de soja selon l'invention. Les appareils selon les figures 2 et 3 ne font pas partie de l'invention. Il est à noter que sur ces figures les éléments structurels et/ou fonctionnels communs aux différentes formes de réalisation peuvent présenter les mêmes références.

Selon une première forme de réalisation plus particulièrement illustrée à la figure 1, l'appareil ménager pour la préparation de lait de soja, conforme à l'invention et désigné dans son ensemble par la référence 1, comprend un châssis 2 sur lequel est adapté de manière amovible un récipient de travail 3. Le châssis 2 forme une embase équipée de moyens de cuisson 4 comprenant un élément électrique chauffant 5 destiné à venir chauffer le fond du récipient de travail 3 par conduction thermique. L'appareil ménager 1 comprend également des moyens de mélange 6 qui, selon l'exemple illustré, comprennent un élément d'agitation 7 formant une hélice disposée à l'intérieur du récipient de travail 3 à proximité de son fond 8. Les moyens de mélange 6 comprennent en outre un moteur électrique 9 qui est disposé dans le châssis 2 et dont l'arbre d'entraînement 10 s'étend à l'extérieur du châssis 2 pour s'emboîter dans un élément d'accouplement 11 de l'élément d'agitation 7. Le fonctionnement des moyens de cuisson 4 et des moyens de mélange 6 est contrôlée par une unité de commande 12 située dans le châssis 2.

L'appareil ménager 1 comprend également un couvercle 15 destiné à venir s'adapter de manière amovible sur le récipient de travail 3. Le couvercle 15 délimite un compartiment 16 de dosage d'une poudre de soja. L'appareil ménager 1 comprend alors des moyens de transfert 17 adaptés pour permettre un passage de la poudre de soja dans le récipient de travail 3. Selon l'exemple illustré les moyens de transfert 17 comprennent un premier canal de transfert 20 qui s'ouvre au niveau du fond du compartiment de dosage 16 pour déboucher dans un second canal de transfert 21 aménagé dans une poignée 22 du récipient de travail. Le second canal de transfert 21 débouche à proximité du fond 8 du récipient de travail et de l'élément d'agitation 7.

L'appareil ménager pour la préparation de lait de soja 1, ainsi formé, est mis en oeuvre de la manière suivante.

Tout d'abord, l'utilisateur remplit une partie au moins du compartiment de dosage 16 avec de la poudre de graines de soja. Afin d'obtenir un lait de soja d'une consistance agréable, il sera de préférence mis en oeuvre une poudre obtenue par broyage de graines de soja avec une granulométrie inférieure à 150 µm avec de préférence une granulométrie moyenne de 50 µm. Une fois la dose souhaitée de poudre introduite dans le compartiment de dosage 16, l'utilisateur place un entonnoir 25 au niveau de l'ouverture supérieure du compartiment de dosage 16. L'utilisateur verse alors de l'eau dans l'entonnoir 25 de sorte qu'elle s'écoule dans le compartiment de dosage 16 pour ensuite passer dans le premier 20 puis dans le second 21 canal de transfert. Au cours de ce trajet, l'eau se mélange avec la poudre de soja. De plus, la position basse de la sortie d'éjection 24 du second canal de transfert 21 dans le récipient de travail 3 induit des remous qui contribuent à favoriser l'homogénéité du mélange eau/poudre de soja. Ainsi, compte tenu de cette configuration, les moyens de transfert 17 forment, selon l'exemple illustré, une partie des moyens de mélange 6 de l'appareil ménager 1. Les moyens de mélange 6 comprennent ainsi une partie au moins des moyens de transfert 17 qui comprennent au moins une sortie d'éjection 24 dans le récipient de travail 3, adaptée pour induire une agitation du contenu du récipient de travail 3.

Une fois l'eau complètement écoulée dans le récipient de travail 3, l'utilisateur déclenche, au moyen de l'unité de commande 12, le fonctionnement des moyens de mélange 6 et des moyens de cuisson 4. Le moteur électrique 9 assure alors un mouvement de rotation de l'élément d'agitation 7 à une vitesse adaptée pour permettre un brassage convenable du contenu du récipient de travail 3 tout en évitant la formation de mousse. L'appareil ménager 1 est conçu pour que les moyens de cuisson 4 portent le contenu du récipient de travail 3 à une température comprise entre 80 °C et 100 °C pendant une durée comprise entre 10 minutes et 20 minutes de manière à assurer une bonne cuisson du lait de soja. Afin d'éviter un foisonnement du lait de soja sous l'effet d'une ébullition de l'eau, la température de cuisson est, de préférence comprise entre 95 °C et 98 °C. L'unité de commande 12 est, de préférence, adaptée pour assurer un arrêt automatique des moyens de cuisson 4 et des moyens de mélange 6.

Au terme de la séquence de cuisson, l'utilisateur peut ôter le récipient de travail 3 du châssis 2, pour verser, par un bec verseur 26 du récipient de travail 3, le lait de soja ainsi préparé dans un bol ou une tasse par exemple.

La figure 2 illustre une autre forme de réalisation d'un appareil ménager 1 pour la préparation de lait de soja. Cette autre forme de réalisation diffère de celle décrite en relation avec la figure 1 en ce que les moyens de mélange 6 sont adaptés pour induire un mouvement du récipient de travail 3. Ainsi, les moyens de mélange 6 comprennent une platine 27 montée de manière flottante sur le châssis 2 par l'intermédiaire de ressorts 28. Les moyens de mélange 6 comprennent en outre un moteur électrique 29 disposé dans la platine 27. Lorsqu'il fonctionne, le moteur électrique 29 entraîne en rotation une masselotte excentrée 30 de sorte que la platine 27 et le récipient de travail 3, qu'elle porte, subissent des vibrations dans un plan horizontal. Afin d'optimiser l'agitation ainsi obtenue, le récipient de travail 3 comprend, en tant qu'élément d'agitation, au moins une ailette d'agitation 32 qui s'étend perpendiculairement à son fond 8.

Selon la forme de réalisation de la figure 2, les moyens de cuisson 4 ne sont pas formés par élément résistif chauffant mais comprennent, d'une part, une source d'un champ magnétique d'induction 35 formée ici par une bobine. Les moyens de cuisson 4 comprennent, d'autre part, un élément conducteur 36 associé au récipient de travail 3 et, dans le cas présent, inclus dans son fond 8. L'élément conducteur 36 est alors adapté pour chauffer sous l'effet du champ magnétique induit par la source de champ magnétique d'induction 35.

Selon cet exemple, le compartiment de dosage 16 du couvercle 15 est en outre adapté pour recevoir une dose préconditionnée D de poudre de soja. La dose préconditionnée D se présente, par exemple, sous la forme d'une galette de poudre de soja enfermée dans un conditionnement formé de deux disques soudés d'une feuille de matériau perméable à l'eau ou se désagrégeant sous l'action de l'eau. Ainsi la dose préconditionnée D forme une sorte de coussin également appelé « pod ».

Le compartiment de dosage 16 comprend alors, en tant que moyens 17 de transfert de la poudre de soja dans le récipient de travail 3, une ouverture 17a débouchant directement dans le récipient de travail 3. Le compartiment de dosage 16 comprend également des moyens 37 d'ouverture au moins partielle du conditionnement qui, selon l'exemple illustré, sont formés par des poinçons 37a destinés à être engagés en force dans la dose préconditionnée D pour en déchirer le conditionnement de manière à permettre l'écoulement de la poudre de soja par les moyens de transfert 17. Plus particulièrement tel que représenté sur la figure 2, le couvercle 15 comporte une partie supérieure 15a montée pivotante par rapport au récipient de travail 3 et une partie inférieure 15b prévue pour porter la dose préconditionnée D et présentant l'ouverture 17a. Le compartiment de dosage 16 est délimité par la partie inférieure 15b et la partie supérieure 15a du couvercle 15. Les poinçons 37a sont issus d'une face inférieure de la partie supérieure 15a du couvercle 15. De ce fait, les moyens 37 d'ouverture au moins partielle du conditionnement de la dose préconditionnée D appartiennent au couvercle 15 disposé sur le récipient de travail 3. Le compartiment de dosage 16 comprend ainsi les moyens 37 d'ouverture au moins partielle du conditionnement de la dose préconditionnée D.

L'appareil ménager pour la préparation de lait de soja ainsi réalisé est mis en oeuvre de la manière suivante. Tout d'abord l'utilisateur remplit le récipient de travail de la quantité d'eau requise. Ensuite, il place la dose préconditionnée D dans le compartiment de dosage 16, puis il engage en force les moyens d'ouverture 37 dans la dose préconditionnée D de sorte que la poudre de soja s'écoule dans le récipient de travail 3. Pour finir, l'utilisateur déclenche la mise en marche de l'appareil ménager 1 au moyen de l'unité de commande 12 de sorte qu'un cycle d'agitation/cuisson, tel que décrit précédemment, est engagé. La figure 3 illustre encore une autre variante de réalisation de l'appareil ménager 1 pour la préparation de lait de soja qui diffère des variantes illustrées aux figures 1 et 2 notamment en ce que le compartiment de dosage 16 est aménagé dans une partie du châssis 2 qui surplombe une zone 40 de réception du récipient de travail 3 formé, par exemple, par une tasse ou un mug amovible. Selon cet exemple, le compartiment de dosage est également destiné à recevoir une dose préconditionnée D et les moyens de transfert 17 comprennent un tube de transfert 41 destiné à venir s'enfoncer au centre de la dose préconditionnée D. A cet effet le tube de transfert 41 présente une extrémité pointue 41' qui forme des moyens d'ouverture au moins partielle du conditionnement de la dose préconditionnée D. Ainsi les moyens de transfert 17 comprennent les moyens 37 d'ouverture au moins partielle du conditionnement de la dose préconditionnée D. Le châssis 2 comprend en outre un couvercle 42 qui est mobile selon un axe de rotation horizontale et qui est destiné à venir fermer de manière hermétique le compartiment de dosage 16.

Selon cet exemple l'appareil ménager 1 comprend un réservoir d'eau 43 destiné à contenir une quantité d'eau au moins suffisante pour la réalisation de lait de soja à partir de la poudre de soja contenu dans la dose préconditionnée D. Les moyens de mélange 6 comprennent alors au moins une et, selon l'exemple illustré, deux canules 44 d'injection d'eau dans la dose préconditionnée D. Les canules d'injection 44 sont placées de part et d'autre du tube de transfert 41 et sont destinées à venir perforer le conditionnement de la dose préconditionnée D. Afin d'assurer l'alimentation des canules d'injection 44, les moyens de mélange 6 comprennent des moyens de pompage 45 de l'eau du réservoir 43. Les moyens de pompage 45 sont reliés aux canules d'injection 44 par une canalisation 46 en partie au moins souple.

Les moyens de pompage 45 peuvent être réalisés de toute manière appropriée. Selon l'exemple illustré, les moyens de pompage 45 comprennent des moyens de chauffage 47 de l'eau qui sont, dans le cas présent, formés par une chaudière de type bouilleur 48. Une telle chaudière de type bouilleur 48 présente l'avantage d'assurer à la fois le pompage et le chauffage de l'eau en provenance du réservoir 43 pour alimenter les canules d'injection 44 en eau chaude sous pression. Afin de permettre une cuisson du contenu du récipient de travail 3, l'appareil ménager comprend, au niveau de la zone de réception 40, les moyens de cuisson 4 formés par des éléments chauffants électriques situés sur la surface de réception du récipient de travail 3 et sur les côtés de la zone de réception 40.

L'appareil ménager 1 ainsi constitué fonctionne de la manière suivante. Après avoir ouvert le couvercle 42 et disposé le récipient de travail 3 dans la zone de réception 40, l'utilisateur place la dose préconditionnée D dans le compartiment de dosage 16. L'utilisateur referme le couvercle 42 ce qui induit une perforation de l'enveloppe de la dose préconditionnée puis un enfoncement du tube de transfert 41 et des canules d'injection 44 dans ladite dose préconditionnée D. Ensuite, l'utilisateur déclenche le fonctionnement des moyens de pompage 45 et des moyens de cuisson 4. La chaudière de type bouilleur 48 effectue alors des séquences d'aspiration de l'eau du réservoir 43 et d'éjection de cette eau bouillante dans la canalisation 46. L'eau bouillante est ainsi introduite dans la dose préconditionnée D par les canules d'injection 44 pour ensuite être évacuée par le tube de transfert 41 constitutif des moyens de transfert 17. Pendant son séjour dans le compartiment de dosage 16, l'eau bouillante se mélange avec la poudre de soja pour ensuite s'écouler dans le récipient de travail 3. L'unité de commande 12 maintient le fonctionnement des moyens de pompage 45 jusqu'à avoir fait passer, dans la dose préconditionnée D, une quantité d'eau adaptée à la quantité de poudre de soja qu'elle contient. Une fois cette quantité atteinte, l'unité de commande 12 interrompt le fonctionnement des moyens de pompage 45 tout en maintenant si cela est nécessaire le fonctionnement des moyens de cuisson 4 de manière à cuire de façon convenable le contenu du récipient de travail 3.

Il doit être remarqué que l'injection d'eau bouillante sous pression dans la dose préconditionnée D permet d'obtenir un mélange eau/poudre de soja de qualité de sorte qu'il n'est pas nécessaire de recourir à une agitation mécanique au moyen d'un élément d'agitation mobile disposé à l'intérieur du récipient de travail.

La figure 4 illustre encore une autre forme de réalisation d'un appareil ménager pour la préparation de lait de soja selon l'invention qui diffère de l'appareil décrit en relation avec la figure 3 en ce que la canule 44 des moyens de transfert 17 se prolonge par un canal de transfert 50 qui débouche dans le fond du récipient de travail par une série de sorties d'éjection 51. Ainsi, l'évacuation du mélange eau/poudre de soja sous pression par les sorties d'éjection 51 lors du remplissage du récipient de travail 3 assure un brassage ou mélange du contenu de ce dernier ce qui contribue à la qualité du mélange eau/poudre de soja. Les moyens de mélange 6 comprennent ainsi une partie au moins des moyens de transfert 17 qui comprennent au moins une sortie d'éjection 51 dans le récipient de travail 3, adaptée pour induire une agitation du contenu du récipient de travail 3.

Selon la forme de réalisation de la figure 4, les moyens de cuisson 4 sont formés par une résistance chauffante 52 s'étendant à l'intérieur du récipient de travail 3 de manière à être plongée à l'intérieur de son contenu.

Le récipient de travail 3 comprend en outre des moyens de soutirage 53 formé par une conduite de soutirage 54 commandé par un robinet 55 à commande manuelle. Les moyens de soutirage 53 permettent de remplir à la demande un contenant tel qu'une tasse ou un mug.

L'appareil représenté figure 4 diffère également de l'appareil illustré figure 3 en ce que les moyens de pompage 45 comprennent une pompe 60 actionnée par un moteur électrique 61. Les moyens de pompage 45 comprennent également, en aval de la pompe 60, des moyens de chauffage 47 comprenant une chambre de chauffage 63 équipée d'une résistance électrique 64.

Selon cet exemple de réalisation, le robinet 55 est à commande manuelle. Toutefois, il pourrait être envisagé de mettre en oeuvre une électrovanne pilotée par l'unité de commande 12 assurant, par exemple, son ouverture à la fin du cycle de cuisson.

Bien entendu, diverses autres modifications peuvent être apportées à l'appareil ménager pour la préparation de lait de soja selon l'invention dans le cadre des revendications annexées.

Ainsi, le mélange de la poudre de soja peut être assuré (en remplacement ou en addition des moyens de mélange décrit ci-dessus) par un bouillonnement du mélange eau/ poudre de soja lors de la cuisson, par exemple en début de cycle de cuisson et pendant une durée déterminée. Le mélange pourrait également être assuré par l'injection de vapeur dans le liquide.

## Revendications

1. Appareil ménager pour la préparation de lait de soja comprenant:
- un récipient de travail (3),
- un compartiment de dosage (16) d'une poudre de soja,
- des moyens de mélange (6) de la poudre de soja avec de l'eau,
- des moyens de transfert (17) de la poudre de soja au moins du compartiment de dosage (16) dans le récipient de travail (3),
- des moyens de cuisson (4) adaptés pour assurer une cuisson du mélange eau/poudre de soja dans le récipient de travail (3),
- les moyens de mélange (6) comprenant une partie au moins des moyens de transfert (17),
- les moyens de transfert (17) comprennent au moins une sortie d'éjection (24, 51) dans le récipient de travail (3),
**caractérisé en ce que** ladite au moins une sortie d'éjection (24, 51) est en position basse dans le récipient de travail (3) ou est dans le fond du récipient de travail (3), et est adaptée pour induire une agitation du contenu du récipient de travail (3).

2. Appareil ménager pour la préparation de lait de soja selon la revendication 1, **caractérisé en ce que** le compartiment de dosage (16) est adapté pour recevoir une dose préconditionnée (D) de poudre de soja et **en ce que** l'appareil comprend des moyens (37) d'ouverture au moins partielle du conditionnement de la dose préconditionnée (D).

3. Appareil ménager pour la préparation de lait de soja selon la revendication 2, **caractérisé en ce que** le compartiment de dosage (16) comprend les moyens (37) d'ouverture au moins partielle du conditionnement de la dose préconditionnée (D).

4. Appareil ménager pour la préparation de lait de soja selon la revendication 2, **caractérisé en ce que** les moyens de transfert (17) comprennent les moyens (37) d'ouverture au moins partielle du conditionnement de la dose préconditionnée (D).

5. Appareil ménager pour la préparation de lait de soja selon l'une des revendications 1 à 4, **caractérisé en ce que** :
- il comprend un réservoir d'eau (43),
- les moyens de mélange (6) comprennent des moyens de pompage (45) de l'eau du réservoir vers le compartiment de dosage (16),
- et les moyens de transfert (17) sont adaptés pour transférer le mélange eau/poudre de soja dans le récipient de travail (3).

6. Appareil ménager pour la préparation de lait de soja selon la revendication 5, **caractérisé en ce que** les moyens de pompage (45) comprennent des moyens de chauffage (47) de l'eau.

7. Appareil ménager pour la préparation de lait de soja selon l'une des revendications 5 ou 6, **caractérisé en ce que** les moyens de pompage (45) comprennent une chaudière de type bouilleur (48).

8. Appareil ménager pour la préparation de lait de soja selon l'une des revendications 5 à 7, **caractérisé en ce que** le compartiment de dosage (16) est adapté pour recevoir une dose préconditionnée (D) de poudre de soja et **en ce que** les moyens de mélange (6) comprennent au moins une canule d'injection (44) de l'eau en provenance du réservoir d'eau (43) dans la dose préconditionnée (D).

9. Appareil ménager pour la préparation de lait de soja selon la revendication 8, **caractérisé en ce que** la canule d'injection (44) se prolonge par un canal de transfert (50) qui débouche dans le fond du récipient de travail (3) par une série de sorties d'éjection (51).

10. Appareil ménager pour la préparation de lait de soja selon l'une des revendications 1 à 9, **caractérisé en ce que** les moyens de mélange (6) sont adaptés pour induire un mouvement du récipient de travail (3).

11. Appareil ménager pour la préparation de lait de soja selon l'une des revendications 1 à 10, **caractérisé en ce que** le récipient de travail (3) est amovible.

12. Appareil ménager pour la préparation de lait de soja selon l'une des revendications 1 à 11, caractérisé en que le récipient de travail (3) comprend des moyens (53) de soutirage de son contenu.

13. Appareil ménager pour la préparation de lait de soja selon l'une des revendications 1 à 12, **caractérisé en ce que** les moyens de cuisson (4) comprennent au moins un élément chauffant situé à l'extérieur du récipient de travail (3).

14. Appareil ménager pour la préparation de lait de soja selon la revendication 13, **caractérisé en ce que** les moyens de cuisson (4) comprennent une source (35) de champ magnétique d'induction et au moins un élément conducteur (36) associé au récipient de travail (3) et adapté pour chauffer sous l'effet du champ magnétique.

15. Appareil ménager pour la préparation de lait de soja selon l'une des revendications 1 à 14, **caractérisé en ce que** les moyens de cuisson (4) comprennent une résistance chauffante plongeant à l'intérieur du récipient de travail (3) de manière à être en contact avec le contenu de ce dernier.

## Patentansprüche

1. Haushaltsgerät für die Zubereitung von Sojamilch, das umfasst:
- einen Arbeitsbehälter (3),
- eine Kammer zur Dosierung (16) von einem Sojamehl,
- Mittel zum Mischen (6) von dem Sojamehl mit Wasser,
- Mittel zur Übertragung (17) von dem Sojamehl mindestens von der Kammer zur Dosierung (16) in den Arbeitsbehälter (3),
- Kochmittel (4), die eingerichtet sind, ein Kochen der Mischung aus Wasser / Sojamehl in dem Arbeitsbehälter (3) sicherzustellen,
- wobei die Mittel zum Mischen (6) zumindest einen Teil der Mittel zur Übertragung (17) umfassen,
- wobei die Mittel zur Übertragung (17) mindestens einen Auswurfausgang (24, 51) in den Arbeitsbehälter (3) umfassen,
**dadurch gekennzeichnet, dass** der mindestens eine Auswurfausgang (24, 51) in einer niedrigen Position in dem Arbeitsbehälter (3) ist oder in dem Boden des Arbeitsbehälters (3) ist und eingerichtet ist, eine Bewegung des Inhalts des Arbeitsbehälters (3) hervorzurufen.

2. Haushaltsgerät für die Zubereitung von Sojamilch nach Anspruch 1, **dadurch gekennzeichnet, dass** die Kammer zur Dosierung (16) eingerichtet ist, eine vorkonditionierte Dosis (D) von Sojamehl aufzunehmen, und dass das Gerät Mittel (37) zum mindestens teilweisen Öffnen der Verpackung der vorkonditionierten Dosis (D) umfasst.

3. Haushaltsgerät für die Zubereitung von Sojamilch nach Anspruch 2, **dadurch gekennzeichnet, dass** die Kammer zur Dosierung (16) Mittel (37) zum mindestens teilweisen Öffnen der Verpackung der vorkonditionierten Dosis (D) umfasst.

4. Haushaltsgerät für die Zubereitung von Sojamilch nach Anspruch 2, **dadurch gekennzeichnet, dass** die Mittel zur Übertragung (17) Mittel (37) zum mindestens teilweisen Öffnen der Verpackung der vorkonditionierten Dosis (D) umfassen.

5. Haushaltsgerät für die Zubereitung von Sojamilch nach einem der Ansprüche 1 bis 4, **dadurch gekennzeichnet, dass**:
- es ein Wasserreservoir (43) umfasst,
- die Mittel zum Mischen (6) Mittel zum Pumpen (45) von Wasser aus dem Reservoir zu der Kammer zur Dosierung (16) umfassen,
- und die Mittel zur Übertragung (17) eingerichtet sind, um die Mischung aus Wasser / Sojapulver in den Arbeitsbehälter (3) zu übertragen

6. Haushaltsgerät für die Zubereitung von Sojamilch nach Anspruch 5, **dadurch gekennzeichnet, dass** die Pumpmittel (45) Mittel zum Heizen (47) von Wasser umfassen.

7. Haushaltsgerät für die Zubereitung von Sojamilch nach einem der Ansprüche 5 oder 6, **dadurch gekennzeichnet, dass** die Pumpmittel (45) einen Erhitzer vom Typ vom Typ Dampfkessel (48) umfassen.

8. Haushaltsgerät für die Zubereitung von Sojamilch nach einem der Ansprüche 5 bis 7, **dadurch gekennzeichnet, dass** die Kammer zur Dosierung (16) eingerichtet ist, eine vorkonditionierte Dosis (D) von Sojamehl aufzunehmen, und dass die Mittel zum Mischen (6) mindestens eine Kanüle (44) zur Injektion von Wasser aus dem Wasserreservoir (43) in die vorkonditionierten Dosis (D) umfassen.

9. Haushaltsgerät für die Zubereitung von Sojamilch nach Anspruch 8, **dadurch gekennzeichnet, dass** die Kanüle zur Injektion (44) durch einen Übertragungskanal (50) verlängert ist, der in dem Boden des Arbeitsbehälters (3) durch eine Reihe von Auswurfeingängen (51) mündet.

10. Haushaltsgerät für die Zubereitung von Sojamilch nach einem der Ansprüche 1 bis 9, **dadurch gekennzeichnet, dass** die Mittel zum Mischen (6) eingerichtet sind, um eine Bewegung des Arbeitsbehälters (3) hervorzurufen.

11. Haushaltsgerät für die Zubereitung von Sojamilch nach einem der Ansprüche 1 bis 10, **dadurch gekennzeichnet, dass** der Arbeitsbehälter (3) abnehmbar ist.

12. Haushaltsgerät für die Zubereitung von Sojamilch nach einem der Ansprüche 1 bis 11, **dadurch gekennzeichnet, dass** der Arbeitsbehälter (3) Mittel (53) zur Entnahme von seinem Inhalt umfasst.

13. Haushaltsgerät für die Zubereitung von Sojamilch nach einem der Ansprüche 1 bis 12, **dadurch gekennzeichnet, dass** die Kochmittel (4) zumindest ein Heizelement umfassen, das sich außerhalb des Arbeitsbehälters (3) befindet.

14. Haushaltsgerät für die Zubereitung von Sojamilch nach Anspruch 13, **dadurch gekennzeichnet, dass** die Kochmittel (4) eine Quelle (35) des Induktionsmagnetfelds und mindestens ein leitendes Element (36) umfassen, das mit dem Arbeitsbehälter (3) verbunden ist und eingerichtet ist, um unter der Wirkung des magnetischen Feldes zu heizen.

15. Haushaltsgerät für die Zubereitung von Sojamilch nach einem der Ansprüche 1 bis 14, **dadurch gekennzeichnet, dass** die Kochmittel (4) einen Heizwiderstand umfassen, der in das Innere des Arbeitsbehälters (3) eingetaucht ist, um in Kontakt mit dem Inhalt des letzteren zu sein.

## Claims

1. Domestic appliance for preparing soya milk, comprising:
- a working receptacle (3),
- a compartment (16) for measuring out soya powder,
- means (6) for mixing the soya powder with water,
- means (17) for transferring the soya powder at least from the measuring-out compartment (16) into the working receptacle (3),
- cooking means (4) suitable for providing cooking of the water/soya powder mixture in the working receptacle (3),
- the mixing means (6) comprising at least part of the transfer means (17),
- the transfer means (17) comprise at least one outlet (24, 51) for ejecting into the working receptacle (3),
**characterised in that** said at least one ejection outlet (24, 51) is in a low position in the working receptacle (3) or is in the bottom of the working receptacle (3), and is suitable for causing a stirring of the content of the working receptacle (3).

2. Domestic appliance for preparing soya milk according to claim 1, **characterised in that** the measuring-out compartment (16) is suitable for receiving a preconditioned dose (D) of soya powder and **in that** the appliance comprises means (37) for the at least partial commencement of the conditioning of the preconditioned dose (D).

3. Domestic appliance for preparing soya milk according to claim 2, **characterised in that** the measuring-out compartment (16) comprises the means (37) for at least partial commencement of the conditioning of the preconditioned dose (D).

4. Domestic appliance for preparing soya milk according to claim 2, **characterised in that** the transfer means (17) comprise the means (37) for the at least partial commencement of the conditioning of the preconditioned dose (D).

5. Domestic appliance for preparing soya milk according to any of claims 1 to 4, **characterised in that**:
- **in that** it comprises a water reservoir (43),
- the mixing means (6) comprise means (45) for pumping water from the reservoir to the measuring-out compartment (16),
- and the transfer means (17) are suitable for transferring the water/soya powder mixture into the working receptacle (3).

6. Domestic appliance for preparing soya milk according to claim 5, **characterised in that** the pumping means (45) comprise means (47) for heating the water.

7. Domestic appliance for preparing soya milk according to either claim 5 or claim 6, **characterised in that** the pumping means (45) comprise a boiler of the kettle type (48).

8. Domestic appliance for preparing soya milk according to any of claims 5 to 7, **characterised in that** the measuring-out compartment (16) is suitable for receiving a preconditioned dose (D) of soya powder and **in that** the mixing means (6) comprise at least one cannula (44) for injecting water coming from the water reservoir (43) into the preconditioned dose (D).

9. Domestic appliance for preparing soya milk according to claim 8, **characterised in that** the injection cannula (44) is extended by a transfer channel (50) that emerges in the bottom of the working receptacle (3) through a series of ejection outlets (51).

10. Domestic appliance for preparing soya milk according to any of claims 1 to 9, **characterised in that** the mixing means (6) are suitable for causing a movement of the working receptacle (3).

11. Domestic appliance for preparing soya milk according to any of claims 1 to 10, **characterised in that** the working receptacle (3) is removable.

12. Domestic appliance for preparing soya milk according to any of claims 1 to 11, **characterised in that** the working receptacle (3) comprises means (53) for drawing off its contents.

13. Domestic appliance for preparing soya milk according to any of claims 1 to 12, **characterised in that** the cooking means (4) comprise at least one heating element situated outside the working receptacle (3).

14. Domestic appliance for preparing soya milk according to claim 13, **characterised in that** the cooking means (4) comprise an induction magnetic field source (35) and at least one conductive element (36) associated with the working receptacle (3) and suitable for heating under the effect of the magnetic field.

15. Domestic appliance for preparing soya milk according to any of claims 1 to 14, **characterised in that** the cooking means (4) comprise a heating element immersed in the working receptacle (3) so as to be in contact with the contents of the latter.
